(19) Europäisches Patentamt
European Patent Office
Office européen des brevets

(11) **EP 1 806 664 A1**

(12) **EUROPEAN PATENT APPLICATION**

(43) Date of publication:
**11.07.2007 Bulletin 2007/28**

(51) Int Cl.:
***G06F 17/30*** *(2006.01)*

(21) Application number: **06022248.6**

(22) Date of filing: **24.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.10.2005 US 730206 P**
**28.12.2005 US 321720**

(71) Applicant: **SAP AG**
**69190 Walldorf (DE)**

(72) Inventors:
• **Otter, Wolfgang**
**74937 Spechbach (DE)**
• **Rüger, Christel**
**63450 Hanau (DE)**
• **Dipper, Stefan**
**69168 Wiesloch (DE)**
• **Hagen, Tobias**
**69121 Heidelberg (DE)**

(74) Representative: **Müller-Boré & Partner**
**Patentanwälte**
**Grafinger Strasse 2**
**81671 München (DE)**

(54) **Translating time-independent data using database operations**

(57) A method and system for linking the contents of two or more at least partially time-independent tables in a multidimensional data source are disclosed. A join operation is generated for the two or more at least partially time-independent tables. The join operation includes a query instruction that is executable on the multidimen-sional data source, and the query instruction has at least one time attribute. A pseudo time dependency between the two or more at least partially time-independent tables is determined. A time interval for the join operation is generated based on the pseudo time dependency. The join operation is then executed using the time interval as the at least one time attribute.

| PROFITC | RESP | DATEFROM | DATETO |
|---------|------|----------|--------|
| BW | Bill | 1.1.2000 | 30.6.2001 |
| BW | Bob | 1.7.2001 | 31.12.9999 |

| CSTCNTR | PROFITC | RESP | DATEFROM | DATETO |
|---------|---------|------|----------|--------|
| 4711 | BW | Jack | 1.1.2001 | 31.5.2001 |
| 4711 | BW | John | 1.6.2001 | 31.12.2001 |
| 4711 | BW | Joe | 1.1.2002 | 31.12.9999 |
| 0815 | KM | Jane | 1.1.2001 | 31.1.2001 |
| 0815 | KM | Jill | 1.2.2001 | 31.12.9999 |

**Fig. 2**

**Description**

**CROSS REFERENCE TO RELATED APPLICATIONS**

The present application claims priority under 35 U.S.C. §119 to U.S. Provisional Application Serial Number 60/730,206, filed October 24, 2005, entitled TRANSLATING TIME-INDEPENDENT DATA USING DATABASE JOINS, the disclosure of which is incorporated herein by reference.

**BACKGROUND**

The subject matter described herein relates to the combination of multidimensional data sources using database operations. Within relational databases, an important tool for linking information is the join. A join links the contents of two or more database tables (referred to hereinafter simply as "tables"). The result of the linking is displayed in the form of another table.

The combining of tables is described using one or more ON conditions within a select statement. An ON condition describes a condition between two tables, whereby one field of each table has to be contained in this condition. Equal join conditions are usually used. They have the format: Fieldl(Tablel) = Field2(Table2). Database systems typically permit any ON conditions. A result set is generated when a join is processed. The following instances are based on the assumption that all fields of all tables are contained in the result set. This is possible without restrictions, so long as the process of obtaining the result set is of most interest.

A table is referred to as Ti, a record of this table is referred to as ti ? Ti. A record which contains initial values only is referred to as e. Linking two tables with a join is referred to with T1 join T2 or T1 left outer join T2. The result set is referred to as TE. A record in the result set tE ? TE has the structure tE = (t1, ..., tn). Each subrecord ti ? Ti is a record of table Ti that is contained in the join. The fields of a record in a table Ti are called field(ti). Within system query language (SQL) statements, for example, tables are called T1 and their fields are referred to as T1 FIELD.

First the result set is determined on the basis of the ON conditions. The result set is then restricted on the basis of a WHERE condition. The result set fulfills the following conditions: every record contains, for every table affected, an element whose structure corresponds to the structure of the table; all ON conditions within a record are fulfilled; all WHERE conditions within a record are fulfilled; and there are no combinations of data records in the database which fulfill the ON and WHERE conditions but which are not contained in the result set.

The following method describes the first step in calculating the result set for two tables T1 and T2, where only the ON conditions are taken into consideration.

Method 1: T1 join T2

1. Examine each record t1 ? T1 in accordance with the second step.

2. Compare each record t2 ? T2 with record t1. If the ON conditions are fulfilled then insert a record tE = (t1, t2) into the result set.

This method only determines the way in which the result set is generated. Most database systems use other, more effective methods. If more than two tables are involved, method 1 can be used, but must be applied in several steps. The sequence of the tables is arbitrary. With regard to method 1, each record t1 ? T1 or t2 ? T2 can appear as a subrecord in several records of the result set, and a record t1 ? T1 or t2 ? T2 may not appear as a subrecord in the result set at all.

In many evaluations, the second case is not desirable. Users often want a record from one of the tables in the result set, even if no suitable record exists in the corresponding table. Therefore, in the SQL standard, so-called outer joins are defined. In this document, only left outer joins are discussed. With a left outer join, method 1 has to be enhanced slightly.

Method 2: T1 left outer join T2

1. Examine each record t1 ? T1 in accordance with the second step

2. Compare each record t2 ? T2 with record t1. If the ON conditions are fulfilled, insert a record tE = (t1, t2) into the result set. If at least one data record is inserted into the result set in this way, return to step 1. Otherwise go to step 3.

3. Insert a record tE = (t1, e) into the result set where the values of subrecord t2 are initial.

This method can also be used if more than two tables are involved. It then has to be applied in several steps. In this case the sequence of the tables is no longer arbitrary. This document does not cover all the problems that can occur when left outer joins are used.

The join methods described above are best suited for flat structures, such as database tables. In the context of a business warehouse, however, multidimensional data structures (InfoCubes) are usually used for evaluations, where key figures are characterized by a multiplicity of characteristics that are arranged in different dimensions. Additionally, data structures of this type often need to be combined with other multidimensional or one-dimensional data structures using a type of join. Therefore, joins for multidimensional data sources must have effective access paths.

Joins between time-dependent tables represent a further problem. In a time-dependent table each record contains one time interval which determines the period in which this record is valid. The time interval can be determined either by two dates (start date and end date) or by a time characteristic (week, month, year etc.).

If two time-dependent tables are connected by a join, it is intuitive that a record can only be a member of the result set if the subrecords of both tables have the same time interval. These time intervals do not have to be identical; the time intervals of the two records can overlap. Appropriate ON conditions have to be formulated. For this, however, the usual equal conditions are no longer adequate. A further problem occurs if the time intervals in the two tables are specified in a different way. For example, one table uses a time characteristic e.g. month, and the other table uses two single dates to define the interval. In particular, this case arises with multidimensional data structures where the use of time characteristics is very common.

InfoSets are a type of InfoProvider. An InfoProvider represents a view of data that can be used to define queries. At runtime, the query instructs the InfoProvider to supply data. The query defines the data that is needed and the selection criteria that are used. InfoSets are virtual InfoProviders as they do not contain their "own" data but represent a view based on existing data sources. This means that several InfoSets can be defined using an existing data source.

Using an InfoSet as an additional InfoProvider is often not worthwhile, as queries can be defined for an individual data source using a different InfoProvider. This is the case, for example, with DataStore objects and master data (characteristics containing master data). For this reason, the essential characteristic of an InfoSet is that it allows several data sources to be linked using a join and in that way, provides information that cannot be provided using other InfoProviders.

Because the definition of joins (as described above) always refers to tables, the following restrictions exist when defining InfoSets: data sources can only be linked that possess a flat (tabular) structure; data sources can only be linked that are represented in the database; and the use of left outer joins must be limited in accordance with the guidelines for the database. These restrictions ensure that the calculation of joins within the database is possible and achieves a desired level of performance.

These restrictions mean that only DataStore objects and master data can be counted as usable DataSources. Equal conditions can only be used as ON conditions when defining InfoSets. Therefore, in the user interfaces, the fields are linked simply with lines. The values of the field have to be equal in a data record in the result set.

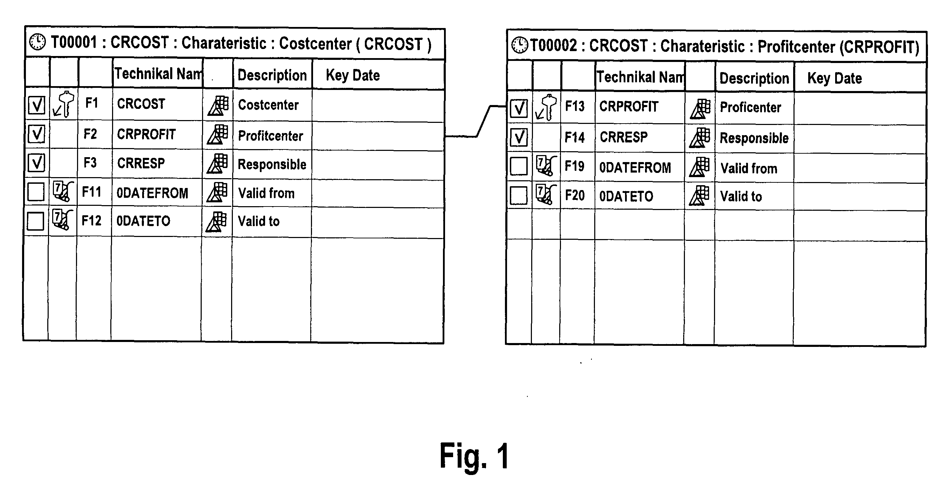

FIG. 1 shows a user interface for defining joins. For time-independent data sources the methods referred to in section 1 adequately describe how to determine the result set of a join, i.e. an InfoSet. However, certain special features have to be considered when using time-dependent data sources. Time-dependent data sources describe objects whose properties (attributes) change over time. For example, the assignment of an employee (object) to a cost center (attribute) can change over the course of time; the cost center is always assigned to the employee for a particular time interval.

In many database systems, master data, or characteristics containing master data, can be defined as time-dependent. In this case the following rules apply: the attributes for one value of the characteristic are only valid for a certain period (this period is described by two dates - start date and end date; and for one value of the characteristic, exactly one valid record exists for each time. 01.01.1000 (dd.mm.yyyy) and 31.12.9999 (dd.mm.yyyy) are used in as the start and end date of the infinite time bar.

With regard to the first rule it is clear that several records can exist in the database for each value of a characteristic, whereby a record always describes exactly one time interval. The second rule guarantees that exactly one value can be determined for the attributes for each point in time. There are no gaps and no overlapping intervals. In order to guarantee this, extensive measures have to be taken when loading master data into the database system. The second rule also ensures that it is always possible to determine the attributes for one given value of a characteristic in a simple way. This means that techniques such as a left outer join are not needed. Within most database systems, characteristics are the only InfoProviders that contain "real" time-dependent data.

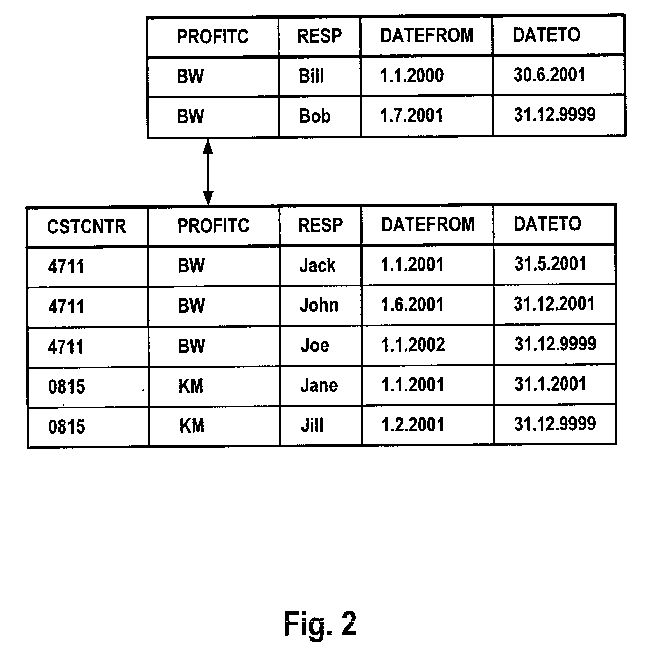

When two time-dependent data sources are joined, it is intuitive that two records in tables T1 and T2 can only be contained in a record in the result set if the time intervals for the two records overlap. The tables shown in FIG. 1 contain the data records shown in FIG. 2. To simplify the example, the start date used is 01.01.2000 (dd.mm.yyyy), and not 01.01.1000.

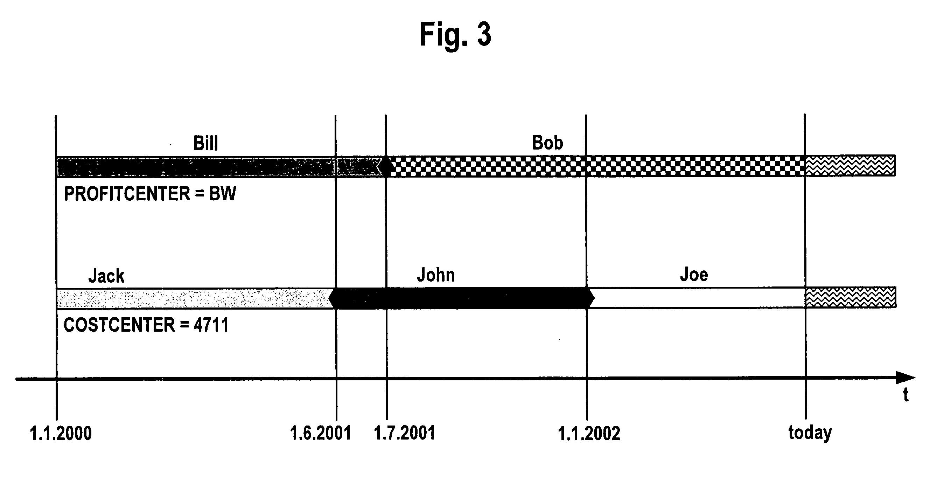

This join allows questions to be answered with regard to the combination of persons responsible for profit centers and persons responsible for cost centers. For example, the operation asks which persons were responsible for the cost center and profit center on 01.09.2001. Or, the operation determines an overview of assignments between persons responsible for the profit center and cost center 4711. To explain the results for the second question, consider the time bar shown in FIG. 3. This time bar shows that the combination (Bill, Joe) and (Bob, Jack) is not valid in the result set. There is no common time interval where these persons have worked together.

If the equal conditions indicated in FIG. 1 are considered alone when the join is formed, the following SQL statement and thus the following result set is produced. In order to simplify the example, only the from-clause of the SQL statement is considered:

```
Select …
from    T1 join T2
                (on T1.Profitc = T2.Profitc)
```

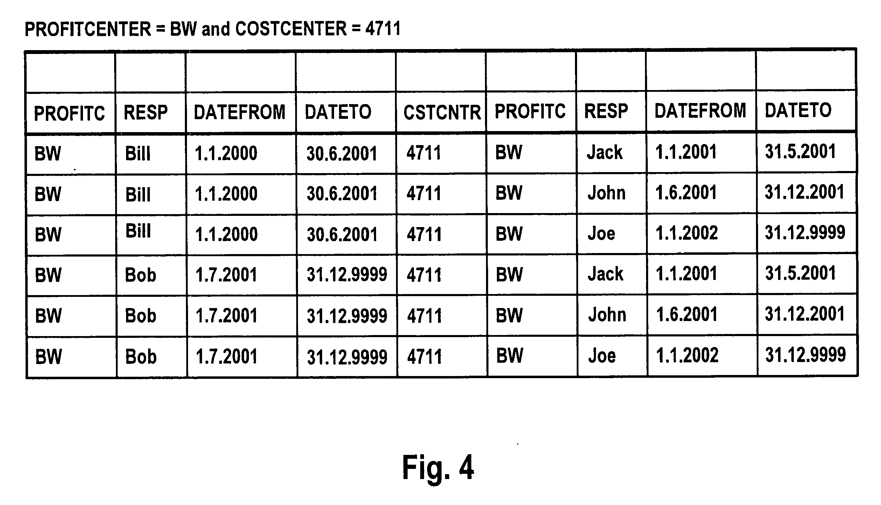

The result of this query is shown in FIG. 4. This result is incorrect because record 3 and record 4 in the result set contain invalid combinations. The time intervals of dates (DATEFROM, DATETO) of the subtables do not overlap, and therefore record 3 and record 4 have to be deleted from the result set. In addition, FIG. 3 illustrates that no combination involving Bill and Joe and Bob and Jack exists. At no time were they simultaneously responsible in their area. These records must not be included in the result set as no common time interval exists.

The common time interval is called a valid time interval and represents a substantial amount of information for each record in the result set. As with time-dependent data sources, the validity of each record is determined by a start date and an end date. The validity of each record in the result set also has to be described by a start date and an end date. Therefore, the result of a join which contains at least one time-dependent data source has to be handled as if it were a time-dependent data source.

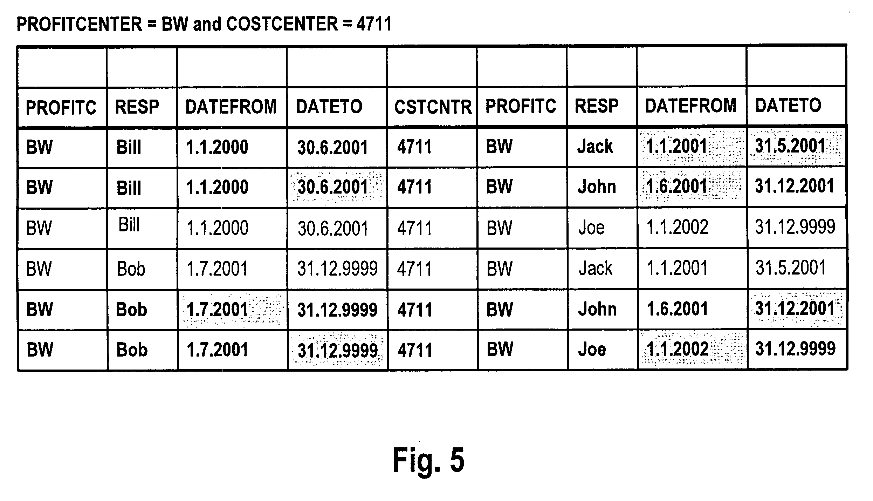

The start date of the valid time interval is the earliest of the two start dates and the end date of the valid time interval is the latest of the two end dates. For the two invalid records (3 and 4), calculating the valid time interval shows that the start date is greater than the end date. A prerequisite of a valid data record in the result set is that it has a valid time interval that is "not empty." FIG. 5 illustrates the result of the valid time interval calculation. The data in the subrecords has been taken into account.

To calculate valid time intervals, method 3 is as follows:

TE is the result set of join T1 join ... join Tn.

For each record tE = (t1, ..., tn) ? TE

$$DATEFROM(tE) = maximum(DATEFROM(ti)) \text{ and}$$

$$DATETO(tE) \quad = minimum(DATETO(ti))$$

is valid for all i, 1 = i = n and Ti is time-dependent.

A valid record exists if the following condition is fulfilled:

Condition 1: Validity of a record of T1 join T2. Two records t1 ? T1 and t2 ? T2 from the time-dependent tables T1 and T2 possess an overlapping time interval in the join T1 join T2 if the following two conditions are fulfilled.

$$DATEFROM(t1) = DATETO(t2) \text{ and}$$

$$DATEFROM(t2) = DATETO(t1)$$

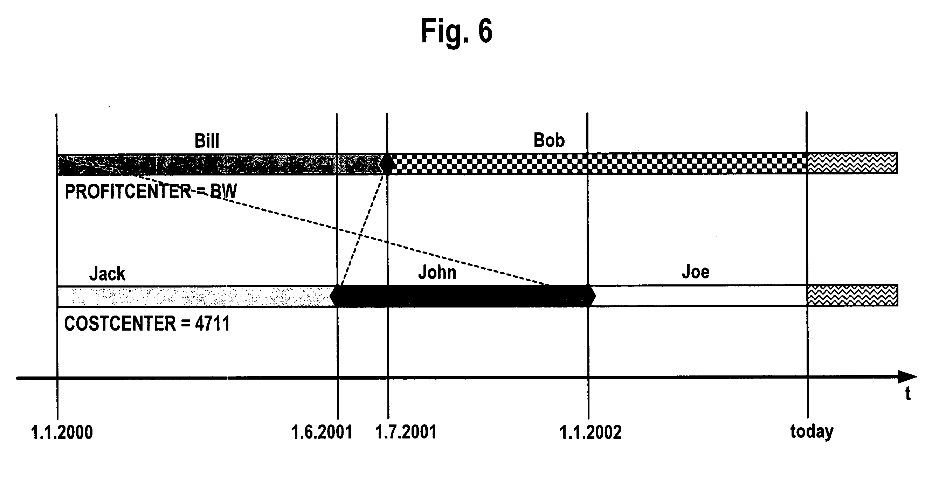

Conditions like these can be evaluated from the database. FIG. 6 shows the record combination (Bill, John). The lines indicate the times that have to be compared. In addition, the enhanced SQL statement is shown.

```
Select …
from    T1 join T2
                (on T1.Profitc   =   T2.Profitc and
                    T1.Datefrom <= T2.Dateto  and
                    T2.Datefrom <= T1.Dateto )

            …
```

This ensures that the database only reads records that have overlapping time intervals and are valid. If the valid time interval is requested by the query for evaluation, method 3 is used. This method is also executed for InfoSets for postprocessing after the data has been read by the database. In principle, this method could also be formulated in SQL statements and executed by the database. If more than two time-dependent tables exist within the join, the principle is similar and can be enhanced to incorporate more time-dependent tables. The condition formulated above must be applied to each pair Ti and Tj of the time-dependent tables.

Condition 2: Validity of a record of T1 join ... join Tn

A record tE = ( t1, ..., tn) of the result set TE of join T1 join ... join Tn is valid if for each pair ti ? Ti and tj ? Tj, 1 = i, j = n, where Ti and Tj are time-dependent, the following condition is valid:

$$\text{DATEFROM}(t_i) = \text{DATETO}(t_j) \text{ and}$$

$$\text{DATEFROM}(t_j) = \text{DATETO}(t_i)$$

In an example where three tables are used, these conditions produce the following SQL statement:

```
Select …
from    T1 join T2
                (on T1.xxx       =   T2.xxx     and
                    T1.Datefrom <= T2.Dateto and
                    T2.Datefrom <= T1.Dateto )
        JOIN T3
                (ON T2.yyy       =   T3.yyy     and
                    T1.Datefrom <= T3.Dateto and
                    T3.Datefrom <= T1.Dateto and
                    T2.Datefrom <= T3.Dateto and
                    T3.Datefrom <= T2.Dateto )
```

Very complex SQL statements can be built very quickly. For this reason, the part of the ON conditions that realizes the calculation of the validity of a data record is generated automatically at the runtime of the InfoSet. The examination and evaluation of the time dependency takes place implicitly and cannot be influenced by the InfoSet author.

As described above, in most database systems only master data can be defined as time-dependent. In this case, two additional internal attributes (start date and end date) are added to the characteristic. The system ensures that neither gaps nor overlaps occur on the time axis. Other InfoProviders (such as DataStore objects and InfoCubes) cannot be defined as time-dependent. However, in many cases, they do contain attributes of type date, or common time characteristics which can be used to describe a time interval.

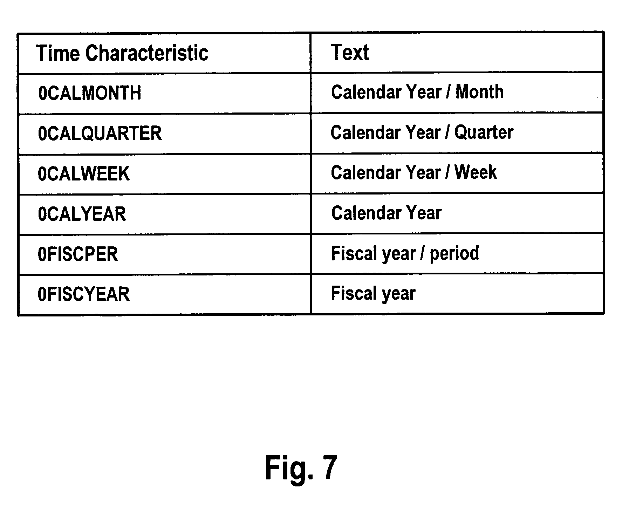

InfoProvider date specifications of this type or time characteristics in InfoProviders can be used within an InfoSet in order to describe the validity of each data record. In this case, the InfoProvider is treated as a 'real' time-dependent data source. This is referred to as pseudo time dependency. Pseudo time dependency can be defined in two ways: 1) one date is specified as the start date and another as the end date for one InfoProvider in the InfoSet; or 2) a time characteristic that can be used to derive a time interval is selected in an InfoProvider in the InfoSet. Two additional date attributes of type date are added automatically to the InfoProvider within the InfoSet ('valid_from' - start date and 'valid_to' - end date). FIG. 7 illustrates technical names and texts of time characteristics that can be used to derive a time interval.

As soon as an InfoProvider has been defined as pseudo time-dependent in one of the ways described above, the InfoProvider is treated as a "real" time-dependent data source. For example, a data record in an InfoProvider contains the time characteristic OCALMONTH - calendar year/month; the value of the time characteristic is 2004.09 (yyyy.mm). This value is be used to derive a start date (01.09.2004) (dd.mm.yyyy) and an end date (30.09.2004) (dd.mm.yyyy). This time interval defines the validity of the data record.

While working with a pseudo time-dependent InfoProvider, the database system cannot prevent gaps occurring on the time axis or time intervals overlapping. This depends on the dataset for the InfoProvider in question. If single date specifications are used to define time dependency, the characteristic values of these date attributes have to be read. Further, the data record has to be "suitable," which means the value of the start date for the characteristic has to be less than the value of the end date for the characteristic. If the value of the end date is less than the value of the start date, the data record is invalid and will not be read during the request.

The ON conditions between the individual InfoProviders are defined in the InfoSet definition. For the definition, lines are drawn between the attributes of the InfoProviders. These attributes are implicitly connected by an equal join condition. If one of the InfoProviders is a 'real' time-dependent InfoProvider, all actions that are necessary to evaluate time dependency are derived from the fact that the InfoProvider is time-dependent. This means that no further actions are required on the user interface.

For pseudo time dependency, one or more InfoProviders have to be defined as pseudo time-dependent. These InfoProviders are then regarded as time-dependent and are treated in exactly the same way as real time-dependent InfoProviders within the InfoSet.

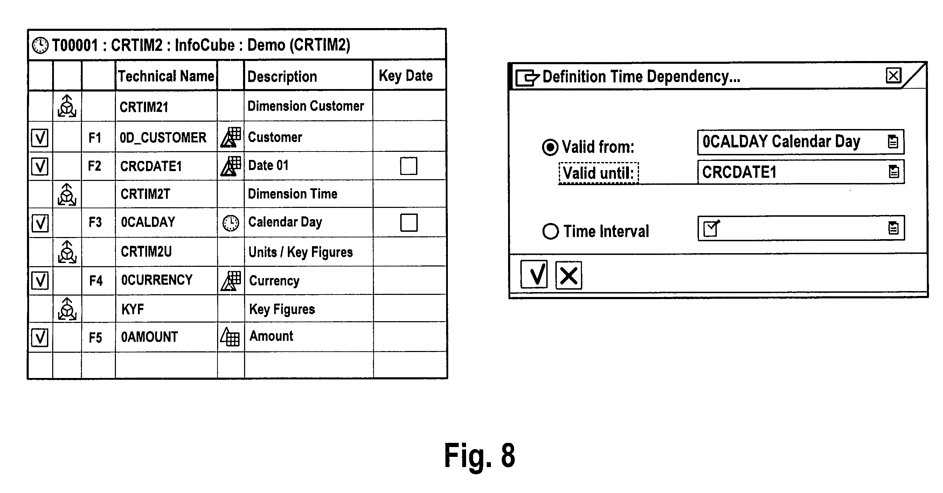

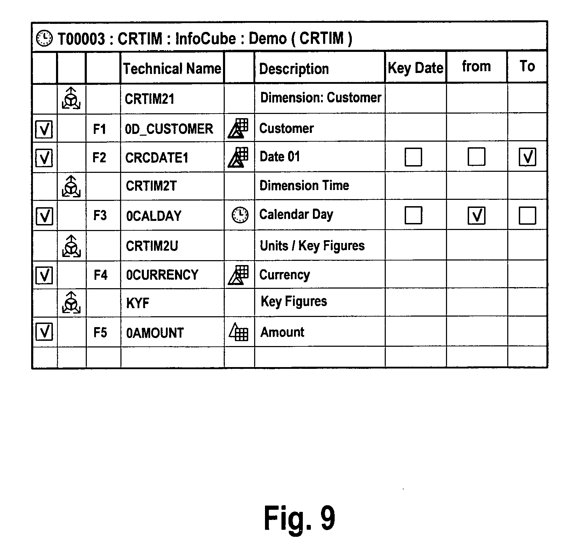

As described in the previous section, two possibilities exist for defining pseudo time dependency. One way is to use two single date specifications. The InfoProvider that is to be defined as pseudo time-dependent must contain at least two attributes of type date. It is pseudo time-dependent due to the fact that one of these attributes is specified as a start date and another as an end date. These entries are made in a separate dialog box in the user interface, as shown in FIG. 8. After values for 'valid_from' and 'valid_to' have been entered in the dialog box, this information is added in two additional columns ('from' and 'to'), as shown in FIG. 9. The marked checkboxes that are set in these columns indicate which attribute is interpreted as the start date and which as the end date.

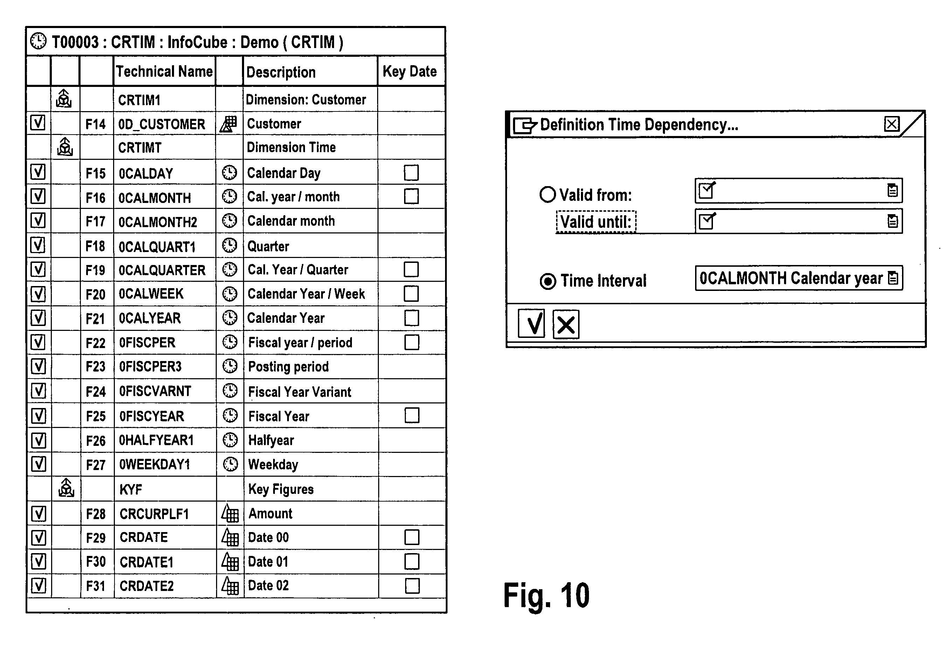

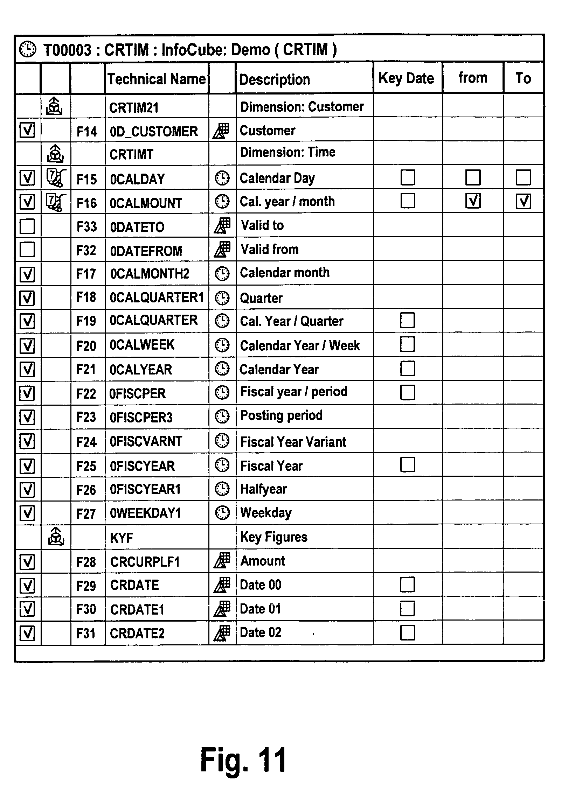

Another way of defining pseudo time dependency is to use time characteristics. The InfoProvider must contain at least one time characteristic. It is pseudo time-dependent if a time characteristics is selected. Again, this takes place in a separate dialog box, as shown in FIG. 10. The start and end dates are calculated using the selected time characteristic. These are put into two additional attributes of type date so that they can be used and evaluated within a query, as shown in FIG. 11.

In this case, the time characteristic OCALMONTH (calendar month) - field alias F16 - is derived. After it has been defined in the separate dialog box, it is displayed in two additional columns ('from' and 'to'). The additional attributes for the start date and end date are: ODATEFROM - (valid from) - field alias F32; ODATETO - (valid to) - field alias F33. For join operations, what is needed is a mechanism for evaluating time dependency.

## SUMMARY

This document describes a method and system for linking the contents of two or more tables in a multidimensional data source, where the contents of the tables are at least partially time-independent. In accordance with one aspect, a computer-implemented method of linking the contents of two or more at least partially time-independent tables in a multidimensional data source includes determining a pseudo time dependency between the two or more at least partially time-independent tables. The method further includes generating a first time interval for the join operation based on the pseudo time dependency, and executing a join operation using the first time interval.

In another aspect, a computer-implemented method includes generating a join operation for the two or more at least partially time-independent tables, the join operation including a query instruction executable on the multidimensional data source, where the query instruction has at least one time attribute. The method further includes the steps of determining a pseudo time dependency between the two or more at least partially time-independent tables, generating a time interval for the join operation based on the pseudo time dependency, executing the join operation using the time interval as the at least one time attribute.

The details of one or more embodiments are set forth in the accompanying drawings and the description below. Other features and advantages will be apparent from the description and drawings, and from the claims.

**BRIEF DESCRIPTION OF THE DRAWINGS**

These and other aspects will now be described in detail with reference to the following drawings.

FIG. 1 shows a user interface for defining joins.

FIG. 2 shows data records from tables in accordance with a join shown in FIG. 1.

FIG. 3 is a time bar graphically illustrating data from the tables in FIG. 2.

FIG. 4 illustrates an SQL statement and result set of a join.

FIG. 5 illustrates the result set of the join as depicted in FIG. 4 an showing a valid time interval.

FIG. 6 illustrates conditions for an overlapping time interval between two tables.

FIG. 7 illustrates technical names and texts of time characteristics that can be used to derive a time interval.

FIG. 8 shows a user interface for defining time dependency using two single date specifications.

FIG. 9 shows a user interface having a representation of a pseudo time-dependent InfoProvider using two single date specifications.

FIG. 10 shows a user interface for defining pseudo time dependency using a time characteristic.

FIG. 11 shows a user interface having a representation of a pseudo time-dependent InfoProvider using a time characteristic which can be used to derive a start date and end date.

FIG. 12 depicts a user interface for defining joins in accordance with exemplary embodiments.

FIG. 13 illustrates a number of data records from a join operation.

FIG. 14 is a representation of time intervals generated by a join operation in accordance with an exemplary embodiment.

FIG. 15 depicts a user interface for defining joins in accordance with an alternative exemplary embodiment.

FIG. 16 depicts yet another user interface for defining joins in accordance with an alternative exemplary embodiment.

FIG. 17 depicts still another user interface for defining joins in accordance with an alternative exemplary embodiment.

FIG. 18 is a graphical illustration of data record generation of a join operation using pseudo time dependency.

Like reference symbols in the various drawings indicate like elements.

**DETAILED DESCRIPTION**

This document describes various systems and methods by which time dependency is evaluated when pseudo time-dependent InfoProviders are used. Different cases are described that reflect the different definition options (using two specific dates or using a time characteristic) and the type of operations executed (for example, inner join or left outer join, etc.).

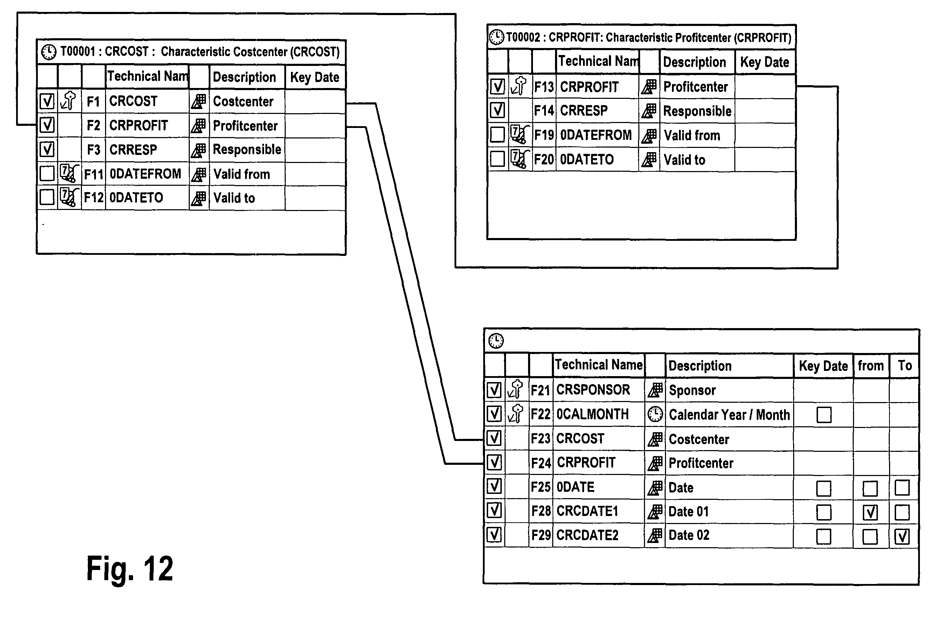

In a first case, using an inner join and two specific attributes of type date, an InfoProvider is defined as pseudo time-dependent since a date has been selected as the start date and another date as the end date. These define the valid time interval. This InfoProvider is connected to another InfoProvider using an inner join condition, as graphically depicted in FIG. 12.

In this case, the attributes F28 (Date_01) and F29 (Date_02) of InfoProvider sponsor (T00003 - CROSPONS) are interpreted as the start date and end date. With this definition, the same logic can be used to determine the data as is used for 'real' time-dependent characteristics. As all the conditions are used in the SQL statement the data provided by the database does not require postprocessing.

```
SELECT … FROM Costcenter JOIN Profitcenter
    ON    Costcenter.Profitcenter  = Profitcenter.Profitcenter
       AND Costcenter.valid_from   <= Profitcenter.valid_to
       AND Profitcenter.valid_from <= Costcenter.valid_to
    JOIN Sponsor
    ON    Sponsor.Profitcenter     = Costcenter.Profitcenter
       AND Sponsor.Costcenter      = Costcenter.Costcenter
       AND Costcenter.valid_from   <= Sponsor.Date_02
```

```
          AND Sponsor.Date_01        <= Costcenter.valid_to
          AND Profitcenter.valid_from <= Sponsor.Date_02
          AND Sponsor.Date_01        <= Profitcenter.valid_to
      GROUP BY ….
```

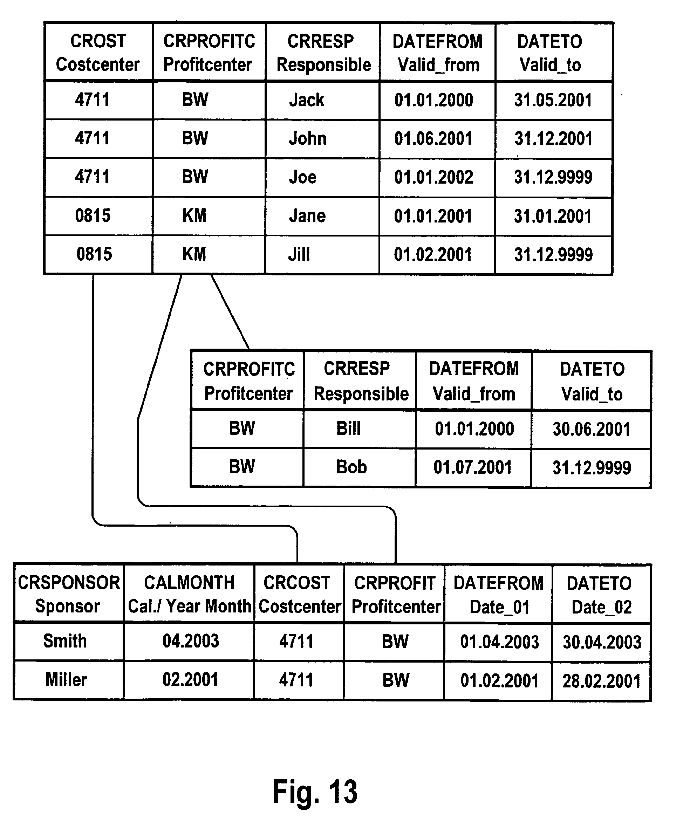

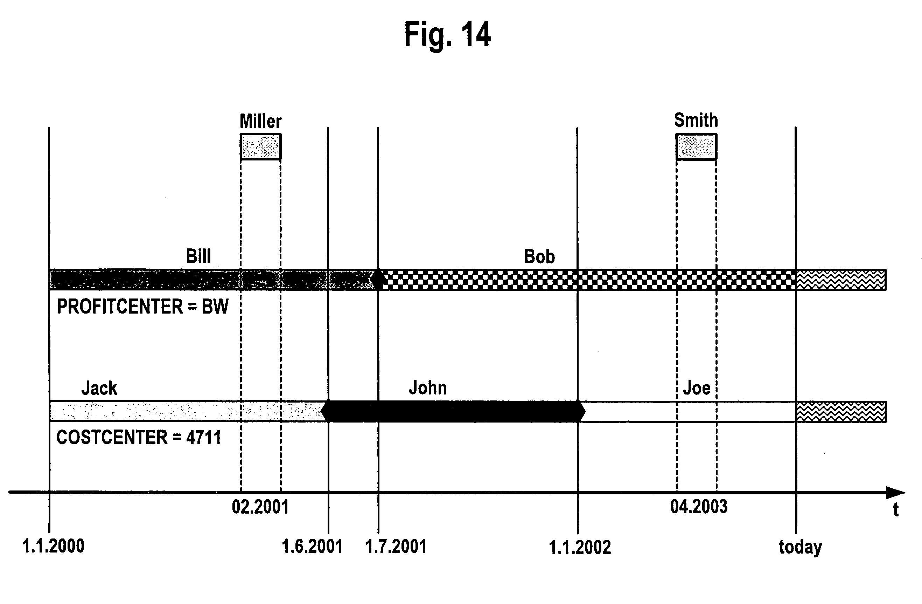

This SQL statement shows that the start date (Date_01) and the end date (Date_02) of the pseudo time-dependent InfoProvider are handled in the same way as the fields valid_from and valid_to in the 'real' time-dependent InfoProvider. FIG. 13 shows the data records that are given. The overlapping time intervals are illustrated in FIG. 14. The SQL statement delivers the following result:

| CRCOST F1 | CRPROFITC F13 | CRSPONSOR F21 | CRRESP Profit F14 | CRRESP Cost F3 | OCALMONTH Sponsor F22 | valid_from | valid_to |
|---|---|---|---|---|---|---|---|
| 4711 | BW | Smith | Bob | Joe | 04.2003 | 01.04.2003 | 30.04.2003 |
| 4711 | BW | Miller | Bill | Jack | 02.2001 | 01.02.2001 | 28.02.2001 |

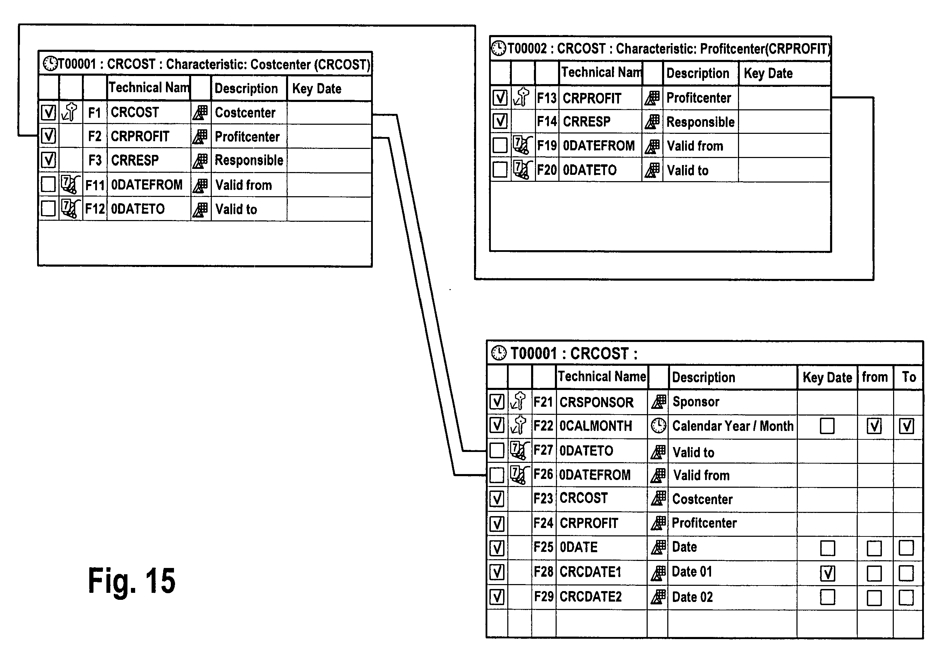

In a second case, using an inner join and time characteristic, an InfoProvider is defined as pseudo time-dependent since a time characteristic that can be used to derive a start date and an end date has been selected. Two internal attributes of type date are added to the InfoProvider. The InfoProvider is connected to another InfoProvider using an inner join, as depicted in FIG. 15.

In this case, attribute F22 (OCALMONTH, Calendar Year/Month) of InfoProvider sponsor (T00003 - CROSPONS) is used. The attributes of type date which are added internally are F26 (valid from - start date) and F27 (valid to - end date). Since the start date and end date are not available as individual database fields they cannot be used in the SQL statement. That means that the SQL statement, as shown below, is built first, without taking the pseudo time dependency into account.

```
SELECT … FROM Costcenter JOIN Profitcenter
   ON    Costcenter.Profitcenter  = Profitcenter.Profitcenter
      AND Costcenter.valid_from   <= Profitcenter.valid_to
      AND Profitcenter.valid_from <= Costcenter.valid_to
   JOIN Sponsor
   ON    Sponsor.Profitcenter     = Costcenter.Profitcenter


      AND Sponsor.Costcenter      = Costcenter.Costcenter
   GROUP BY ….
```

Accordingly, too many data records may be read and the records will require postprocessing. In accordance with figure 14 from the previous example, the superset that is determined by the SQL statement is as follows:

| CRCOST F1 | CRPROFITC F13 | CRSPONSOR F21 | CRRESP Profit F14 | CRRESP Cost F3 | OCALMONTH Sponsor F22 | valid_from | valid_to |
|---|---|---|---|---|---|---|---|
| 4711 | BW | Smith | Bob | Joe | 04.2003 | 01.01.2002 | 31.12.9999 |
| 4711 | BW | Miller | Bob | Joe | 02.2001 | 01.01.2002 | 31.12.9999 |
| 4711 | BW | Smith | Bill | Jack | 04.2003 | 01.01.2000 | 31.05.2001 |
| 4711 | BW | Miller | Bill | Jack | 02.2001 | 01.01.2000 | 31.05.2001 |
| 4711 | BW | Smith | Bob | John | 04.2003 | 01.07.2001 | 31.12.2001 |
| 4711 | BW | Miller | Bob | John | 02.2001 | 01.07.2001 | 31.12.2001 |
| 4711 | BW | Smith | Bill | John | 04.2003 | 01.06.2001 | 30.06.2001 |
| 4711 | BW | Miller | Bill | John | 02.2001 | 01.06.2001 | 30.06.2001 |

The valid time interval (valid_from and valid_to) is determined first only using the data from the two InfoProviders 'costcenter' and 'profit center'. In the subsequent step, the start date and end date are calculated for each data record using the value of the calendar month (F22):

· 02.2001 à 01.02.2001 - 28.02.2001 (dd.mm.yyyy)

· 04.2003 à 01.04.2003 30.04.2004 (dd.mm.yyyy)

The system then checks every data record to see whether the derived time interval overlaps with the valid time interval that had already been determined by the SQL statement (only 'costcenter' and 'profit center' have been taken into account). If this is not the case, the data record is deleted. The following data records represent the final result and the expected result:

| CRCOST | CRPROFITC Profit Cost | CRSPONSOR Sponsor | CRRESP | CRRESP | CALMONTH | valid_from | valid_to |
|---|---|---|---|---|---|---|---|
| 4711 | BW | Smith | Bob | Joe | 04.2003 | 01.04.2003 | 30.04.2003 |
| 4711 | BW | Miller | Bill | Jack | 02.2001 | 01.02.2001 | 28.02.2001 |

EP 1 806 664 A1

A first method for determining the result set is set forth below, and assumes that TE is the result set of join T1 join ... join Tn. At least one of the tables Ti is defined as pseudo time-dependent and uses a time characteristic to derive the start date and the end date. TE was determined using an SQL statement which contained a superset of the result set.

Result set TE' is determined from TE. A record tE' = (t1' , ... , tn') is determined for each data record tE = (t1, ..., tn) ? TE. With the determination of data record tE' from tE = (tl, ..., tn) which applies to all i, 1= i = n. If Ti is not pseudo time-dependent, ti = ti'. If Ti is pseudo time-dependent, ti' results from ti by calculating the start date and the end date. Both are derived from the time characteristic that is defined in the InfoProvider. As soon as all ti', 1= i = n are determined, the valid time interval for record tE' is calculated according to algorithm 3. If the result is not empty, the data record it added to the result set TE' - otherwise the data record will be deleted. TE' is the result set of join T1 join ... jo in Tn.

It is possible that the time interval derived from the time characteristic has already been calculated and transferred to the database. Databases provide so-called UDFs (user defined functions) for this purpose. Fields that are calculated by the database using a UDF can be included in the SQL statement just like existing database fields.

In some cases, deriving the time interval from the time characteristic is a relatively simple process. For example, the start date and end date can be calculated fairly easily if the time characteristic is a calendar month (OCALMONTH) or a calendar year (OCALYEAR). Time characteristics of this type are candidates for using UDFs. Other time characteristics, for example the fiscal year (OFISCYEAR) or the fiscal year/period (OFISCPER), are too complicated in their logic to use a UDF to calculate their start and end date. For these reasons, only the fields which already exist in the format of type date are used in the SQL statement.

In a third case, using a left outer join and two attributes of type date, an InfoProvider is defined as pseudo time-dependent if one date has been selected as the start date and another as the end date. These two dates define the valid time interval. This InfoProvider is connected to another InfoProvider using a left outer join condition.

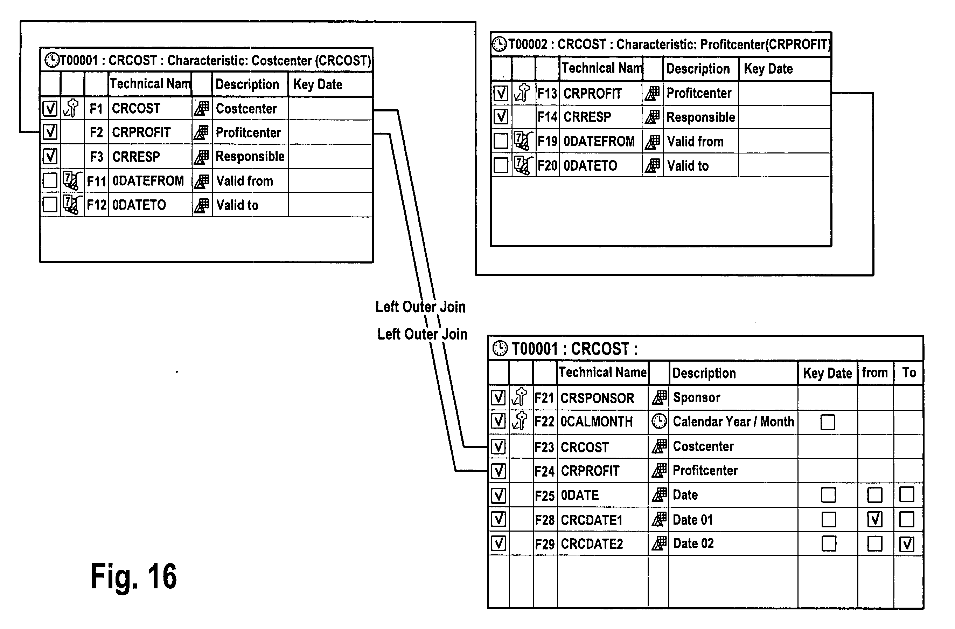

The following example of the third case is similar to the example in the first case described above. A difference is that the InfoProvider sponsor (T00003 - CROSPONS) is defmed as a left outer InfoProvider. In the user interface, as shown in FIG. 16, this is indicated as the InfoProvider has a brighter shade, and the text 'left outer join' is added to the links.

Here the same logic can be used to obtain the result set and determine the valid time interval as is used with 'real' time-dependent characteristics. The SQL statement is as follows:

```
SELECT … FROM ( Costcenter JOIN Profitcenter
    ON      Costcenter.Profitcenter  = Profitcenter.Profitcenter )
        AND Costcenter.valid_from   <= Profitcenter.valid_to
        AND Profitcenter.valid_from <= Costcenter.valid_to
    LEFT OUTER JOIN Sponsor
    ON      Sponsor.Profitcenter     = Costcenter.Profitcenter
        AND Sponsor.Costcenter       = Costcenter.Costcenter
        AND Costcenter.valid_from    <= Sponsor.Date_02
        AND Sponsor.Date_01          <= Costcenter.valid_to
        AND Profitcenter.valid_from  <= Sponsor.Date_02
        AND Sponsor.Date_01          <= Profitcenter.valid_to
    GROUP BY … .
```

The result set of the SQL statement is as follows:

**14**

| CRCOST F1 | CRPROFIT F13 | CRSPONSOR F21 | CRRESP Profit F14 | CRRESP Cost F3 | OCALMONTH Sponsor F22 | *valid_from* | *valid_to* |
|---|---|---|---|---|---|---|---|
| 4711 | BW | Miller | Bill | Jack | 02.2001 | 01.02.2001 | 28.02.2001 |
| 4711 | BW | | Bill | John | | 01.06.2001 | 30.06.2001 |
| 4711 | BW | | Bob | John | | 01.07.2001 | 31.12.2001 |
| 4711 | BW | Smith | Bob | Joe | 04.2003 | 01.04.2003 | 30.04.2003 |

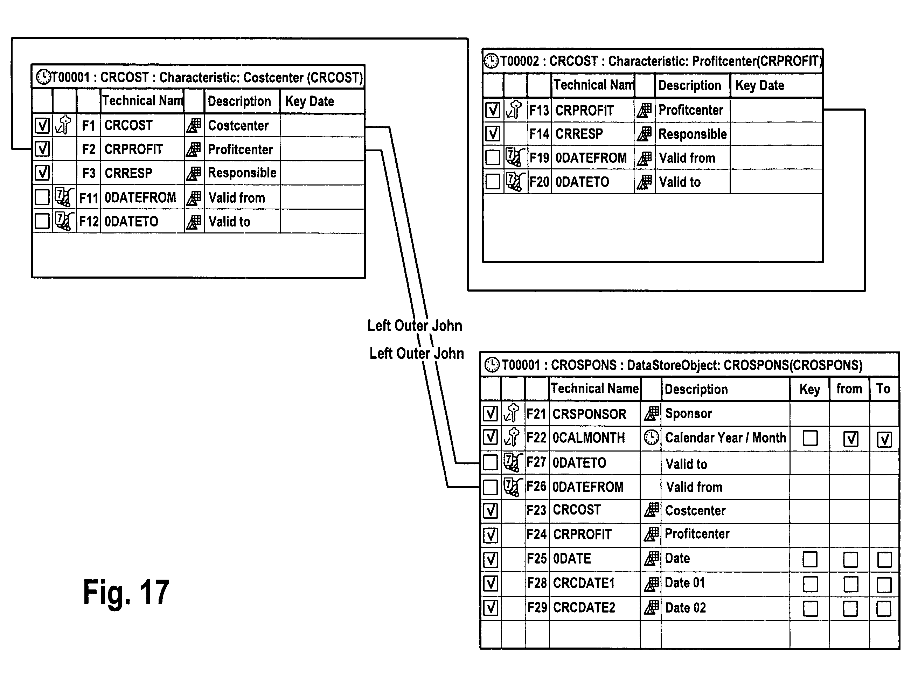

In a fourth case, using a left outer join and a time characteristic, an InfoProvider is defined as pseudo time-dependent if a time characteristic which can be used to derive a start date and an end date has been selected. Two internal attributes of type date have been added to the InfoProvider. The InfoProvider is connected to another InfoProvider using a left outer join. The following example of the fourth case is similar to the example of the second case. The only difference is that the InfoProvider sponsor (T00003 - CROSPONS) is defined as a left outer InfoProvider, as shown in FIG. 17.

Since the start date and the end date are not available as individual database fields, they cannot be used in the SQL statement. Thus, the SQL statement is first built without taking the pseudo time dependency into account, as follows:

```
SELECT … FROM Costcenter JOIN Profitcenter
    ON     Costcenter.Profitcenter = Profitcenter.Profitcenter
       AND Costcenter.valid_from  <= Profitcenter.valid_to
       AND Profitcenter.valid_from<= Costcenter.valid_to
    LEFT OUTER JOIN Sponsor
    ON     Sponsor.Profitcenter    = Costcenter.Profitcenter
       AND Sponsor.Costcenter      = Costcenter.Costcenter
    GROUP BY … .
```

The SQL statement first returns the same result set, as described above. To facilitate better understanding of the postprocessing, two additional columns ('valid_from' and 'valid_to') are added that describe the time interval of the InfoProviders 'costcenter' and 'profitcenter', as shown below:

| CRCOST | CRPROFITC | CRSPONSOR | CRRESP Profit | CRRESP Cost | valid_from cost | valid_to Cost | valid_from Profit | valid_to Profit | OCALMONTH Sponsor | valid_from | valid_to |
|---|---|---|---|---|---|---|---|---|---|---|---|
| F1 | F13 | F21 | F14 | F3 | F11 | F12 | F19 | F20 | F22 | | |
| 4711 | BW | Smith | Bob | Joe | 01.01.2002 | 31.12.9999 | 01.07.2001 | 31.12.9999 | 04.2003 | 01.01.2002 | 31.12.9999 |
| 4711 | BW | Miller | Bob | Joe | 01.01.2002 | 31.12.9999 | 01.07.2001 | 31.12.9999 | 02.2001 | 01.01.2002 | 31.12.9999 |
| 4711 | BW | Smith | Bill | Jack | 01.01.2000 | 31.05.2001 | 01.01.2000 | 30.06.2001 | 04.2003 | 01.01.2000 | 31.05.2001 |
| 4711 | BW | Miller | Bill | Jack | 01.01.2000 | 31.05.2001 | 01.01.2000 | 30.06.2001 | 02.2001 | 01.01.2000 | 31.05.2001 |
| 4711 | BW | Smith | Bob | John | 01.06.2001 | 31.12.2001 | 01.07.2001 | 31.12.9999 | 04.2003 | 01.07.2001 | 31.12.2001 |
| 4711 | BW | Miller | Bob | John | 01.06.2001 | 31.12.2001 | 01.07.2001 | 31.12.9999 | 02.2001 | 01.07.2001 | 31.12.2001 |
| 4711 | BW | Smith | Bill | John | 01.06.2001 | 31.12.2001 | 01.01.2000 | 30.06.2001 | 04.2003 | 01.06.2001 | 30.06.2001 |
| 4711 | BW | Miller | Bill | John | 01.06.2001 | 31.12.2001 | 01.01.2000 | 30.06.2001 | 02.2001 | 01.06.2001 | 30.06.2001 |

As described above, too many data records may be read and the records will therefore require postprocessing, as F22 (OCALMONTH calendar year/month) is not used in the SQL statement. However, the postprocessing of data records must be organized differently than in the earlier example because of the left outer join condition. The start date and end date are subsequently calculated for each data record using the value of the calendar month (F22):

· 02.2001 à 01.02.2001 - 28.02.2001 (dd.mm.yyyy)

· 04.2003 à 01.04.2003 - 30.04.2004 (dd.mm.yyyy)

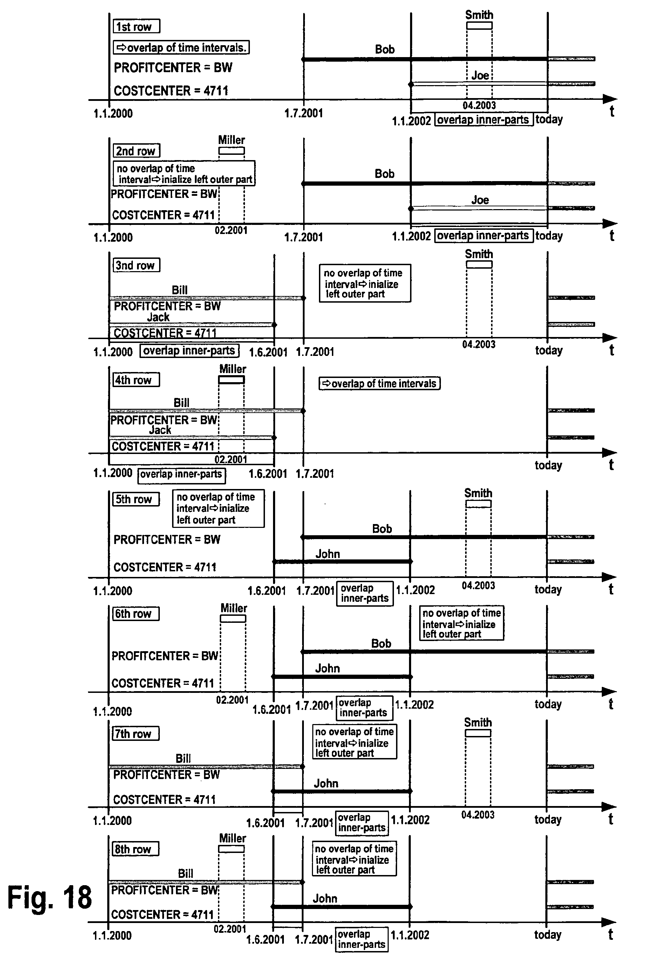

The system checks each data record to see whether the derived time interval overlaps with the valid time interval that was calculated previously (only taking cost center and profit center into account). If this is the case, the data record remains in the result set. However, even if this is not the case, the data record may not be deleted because at least one data record has to remain in the result set where the left outer part is initial. Therefore all the fields from the left outer part are initialized first. FIG. 18 illustrates this process.

An intermediate result is then generated. If a time overlap exists, the values of the valid time interval (valid_from and valid_to) are adapted if necessary. Otherwise the values (valid_from and valid_to) remain unchanged.

| CRCOST | CRPROFITC | CRSPONSOR | CRRESP Profit | CRRESP Cost | valid_from Cost | valid_to Cost | valid_from Profit | valid_to Profit | OCALMONTH Sponsor | valid_from | valid_to |
|---|---|---|---|---|---|---|---|---|---|---|---|
| F1 | F13 | F21 | F14 | F3 | F11 | F12 | F19 | F20 | F22 | | |
| 4711 | BW | Smith | Bob | Joe | 01.01.2002 | 31.12.9999 | 01.07.2001 | 31.12.9999 | 04.2003 | 01.04.2003 | 30.04.2003 |
| 4711 | BW | | Bob | Joe | 01.01.2002 | 31.12.9999 | 01.07.2001 | 31.12.9999 | | 01.01.2002 | 31.12.9999 |
| 4711 | BW | | Bill | Jack | 01.01.2000 | 31.05.2001 | 01.01.2000 | 30.06.2001 | | 01.01.2000 | 31.05.2001 |
| 4711 | BW | Miller | Bill | Jack | 01.01.2000 | 31.05.2001 | 01.01.2000 | 30.06.2001 | 02.2001 | 01.02.2001 | 28.02.2001 |
| 4711 | BW | | Bob | John | 01.06.2001 | 31.12.2001 | 01.07.2001 | 31.12.9999 | | 01.07.2001 | 31.12.2001 |
| 4711 | BW | | Bob | John | 01.06.2001 | 31.12.2001 | 01.07.2001 | 31.12.9999 | | 01.07.2001 | 31.12.2001 |
| 4711 | BW | | Bill | John | 01.06.2001 | 31.12.2001 | 01.01.2000 | 30.06.2001 | | 01.06.2001 | 30.06.2001 |
| 4711 | BW | | Bill | John | 01.06.2001 | 31.12.2001 | 01.01.2000 | 30.06.2001 | | 01.06.2001 | 30.06.2001 |

Next the intermediate result is sorted by the keys of the inner parts as well as by the valid time intervals of the inner parts (F1, F13, F14, F3, F11, F12, F19, F20). The sort sequence is shown in the following graphic table. Data records that have the same sort key values can be easily identified by the zebra pattern.

| CRCOST | CRPROFITC | CRSPONSOR | CRRESP Profit | CRRESP Cost | valid_from Cost | valid_to Cost | valid_from Profit | valid_to Profit | OCALMONTH sponsor | valid_from | valid_to |
|---|---|---|---|---|---|---|---|---|---|---|---|
| F1 | F13 | F21 | F14 | F3 | F11 | F12 | F19 | F20 | F22 | | |
| 4711 | BW | | Bill | Jack | 01.01.2000 | 31.05.2001 | 01.01.2000 | 30.06.2001 | | 01.01.2000 | 31.05.2001 |
| 4711 | BW | Miller | Bill | Jack | 01.01.2000 | 31.05.2001 | 01.01.2000 | 30.06.2001 | 02.2001 | 01.02.2001 | 2B.02.2001 |
| 4711 | BW | | Bill | John | 01.06.2001 | 31.12.2001 | 01.01.2000 | 30.06.2001 | | 01.06.2001 | 30.06.2001 |
| 4711 | BW | | Bill | John | 01.06.2001 | 31.12.2001 | 01.01.2000 | 30.06.2001 | | 01.06.2001 | 30.06.2001 |
| 4711 | BW | | Bob | John | 01.06.2001 | 31.12.2001 | 01.07.2001 | 31.12.9999 | | 01.07.2001 | 31.12.2001 |
| 4711 | BW | | Bob | John | 01.06.2001 | 31.12.2001 | 01.07.2001 | 31.12.9999 | | 01.07.2001 | 31.12.2001 |
| 4711 | BW | | Bob | Joe | 01.01.2002 | 31.12.9999 | 01.07.2001 | 31.12.9999 | | 01.01.2002 | 31.12.9999 |
| 4711 | BW | Smith | Bob | Joe | 01.01.2002 | 31.12.9999 | 01.07.2001 | 31.12.9999 | 04.2003 | 01.04.2003 | 30.04.2003 |

Next the system examines each group that has the same sort key values. Within a group of this type, data records may exist that have initial left outer values. This is the case if the derived valid time interval of the left outer part does not overlap with the valid time interval that has been calculated previously. In addition, data records may exist which have values in their left outer part that are not initial. This is the case if the derived valid time interval of the left outer part does overlap with the valid time interval that has been calculated previously.

If the left outer parts of all data records within one group are initial, then no data records exist for the left outer table. According to left outer join definition, exactly one data record with an initial left outer part has to be added to the result set. If some left outer parts of all of the data records within one group are initial, and some parts contain values that are not initial, then one or more left outer table data records exist. In this case, the data records with the initial left outer parts must not be added to the result set, while all other data records which do contain values in their left outer parts that are not initial must be added to the result set.

The first and second data records illustrate this point: In this case the second data record contains a left outer part that is not initial. Therefore the first data record can be deleted and the second data record is added to the result set. The same is true of the seventh and eighth data records. For the third and fourth data records, both left outer parts are initial. In this case, only one data record is added to the result set, and all other records of this group have to be deleted. The same is true of the fifth and sixth data records. The final result is as follows:

| CRCOST | CRPROFITC | CRSPONSOR | CRRESP Profit | CRRESP Cost | valid_from Cost | valid_to Cost | valid_from Profit | validate Profit | OCALMONTH Sponsor | valid_from | valid_to |
|---|---|---|---|---|---|---|---|---|---|---|---|
| F1 | F13 | F21 | F14 | F3 | F11 | F12 | F19 | F20 | F22 | | |
| 4711 | BW | Miller | Bill | Jack | 01.01.2000 | 31.05.2001 | 01.01.2000 | 30.06.2001 | 02.2001 | 01.02.2001 | 28.02.2001 |
| 4711 | BW | | Bill | John | 01.06.2001 | 31.12.2001 | 01.01.2000 | 30.06.2001 | | 01.06.2001 | 30.06.2001 |
| 4711 | BW | | Bob | John | 01.06.2001 | 31.12.2001 | 01.07.2001 | 31.12.9999 | | 01.07.2001 | 31.12.2001 |
| 4711 | BW | Smith | Bob | Joe | 01.01.2002 | 31.12.9999 | 01.07.2001 | 31.12.9999 | 04.2003 | 01.04.2003 | 30.04.2003 |

If the time intervals of the InfoProviders 'cost center' and 'profit center' are not taken into account, the result is as follows:

| CRCOST F1 | CRPROFITC F13 | CRSPONSOR F21 | CRRESP Profit F14 | CRRESP Cost F3 | OCALMONTH Sponsor F22 | valid_from | valid_to |
|---|---|---|---|---|---|---|---|
| 4711 | BW | Miller | Bill | Jack | 02.2001 | 01.02.2001 | 28.02.2001 |
| 4711 | BW | | Bill | John | | 01.06.2001 | 30.06.2001 |
| 4711 | BW | | Bob | John | | 01.07.2001 | 31.12.2001 |
| 4711 | BW | Smith | Bob | Joe | 04.2003 | 01.04.2003 | 30.04.2003 |

This result corresponds with the result in of the third case.

The following description provides a method by which an unrestricted number of InfoProviders to be connected using a left outer join condition.

TE is the result set of join T1 join ...join Tn. At least one of the tables Ti was defined as pseudo time-dependent, using a time characteristic to derive the start date and end date. In addition, this table has to be connected to another InfoProvider using a left outer join operation. TE was first determined using a SQL statement which contained a superset of the final result set.

In the following, tables that are connected using an inner or left outer join are called 'inner joins' and 'left outer joins' respectively. Result set TE' is determined from TE. A record tE' = (t1', ..., tn') is determined for each data record tE = (tl, ..., tn) I TE. With the determination of data record tE' from tE = (tl, ..., tn) which applies to all i, with 1= i = n. If Ti is not pseudo time-dependent, then ti = ti'. If Ti is pseudo time-dependent, then ti' results from ti by calculating the start date and the end date. Both are derived from the time characteristic that are defined in the InfoProvider.

As soon as each ti', 1= i = n of a data record tE' is determined, the preliminary valid time interval is calculated as described above, only taking the inner parts into account. If the preliminary valid time interval is empty, the data record tE' = (t1', ..., tn') is deleted and will not be added to the final result TE' set. If the preliminary valid time interval is not empty, each data record ti' which is part of an outer table is checked.

The data record is retained if the time interval which is derived from the time characteristic (left outer part) overlaps with the time interval that has been calculated previously (inner parts). The data record ti' (left outer part) is initialized if the time interval which is derived from the time characteristic (left outer part) does not overlap with the time interval that has been calculated previously (inner parts).

The valid time interval is then recalculated in accordance with algorithm 3 and all InfoProviders are now taken into account. Tables ti' which have initial values are not included. If the time interval is rendered invalid (condition 2 from section 2.3 is not fulfilled), the data record tE' = (t1', ..., tn') is deleted and will not be added to the result set TE'. Next the result set TE' is sorted. All fields of all inner tables ti' are taken as sort keys, including the fields describing the time intervals of these tables.

The data records are then checked in one group of table TE' which have the same sort key values. The data records are added to the result set if the fields of at least one left outer part in one group are not initial. In this case, all the data records with initial values in each left outer part are deleted and are not added to the result set. If all of the data records in one group have initial values in each left outer part, all but one of the data records are deleted from this group and from the final result set. The final result set TE' consists of the data records of each group.

Embodiments of the invention and all of the functional operations described in this specification can be implemented in digital electronic circuitry, or in computer software, firmware, or hardware, including the structures disclosed in this specification and their structural equivalents, or in combinations of them. Embodiments of the invention can be implemented as one or more computer program products, i.e., one or more modules of computer program instructions encoded on a computer readable medium, e.g., a machine readable storage device, a machine readable storage medium, a memory device, or a machine-readable propagated signal, for execution by, or to control the operation of, data processing apparatus.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of them. A propagated signal is an artificially generated signal, e.g., a machine-generated electrical, optical, or electromagnetic signal, that is generated to encode information for transmission to suitable receiver apparatus.

A computer program (also referred to as a program, software, an application, a software application, a script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices.

Information carriers suitable for embodying computer program instructions and data include all forms of non volatile memory, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the invention, or any combination of such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Certain features which, for clarity, are described in this specification in the context of separate embodiments, may also be provided in combination in a single embodiment. Conversely, various features which, for brevity, are described in the context of a single embodiment, may also be provided in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Particular embodiments of the invention have been described. Other embodiments are within the scope of the following claims. For example, the steps recited in the claims can be performed in a different order and still achieve desirable results. In addition, embodiments of the invention are not limited to database architectures that are relational; for example, the invention can be implemented to provide indexing and archiving methods and systems for databases built on models other than the relational model, e.g., navigational databases or object oriented databases, and for databases having records with complex attribute structures, e.g., object oriented programming objects or markup language documents. The processes described may be implemented by applications specifically performing archiving and retrieval functions or embedded within other applications.

**Claims**

1. A computer-implemented method of linking the contents of two or more at least partially time-independent tables in a multidimensional data source, the method comprising:

   generating a join operation for the two or more at least partially time-independent tables, the join operation including a query instruction executable on the multidimensional data source, the query instruction having at least one time attribute;
   determining a pseudo time dependency between the two or more at least partially time-independent tables;
   generating a time interval for the join operation based on the pseudo time dependency; and
   executing the join operation using the time interval as the at least one time attribute.

2. A computer-implemented method in accordance with claim 1, wherein the join operation is an inner join operation, and / or a left outer join operation.

3. A computer-implemented method in accordance with claims 1 or 2, wherein the at least one time attribute is based on a date, and / or on a time.

**4.** A computer-implemented method in accordance with anyone of claims 1 to 3, wherein executing the join operation includes:

determining a result set of the join operation, the result set including a plurality of data records; and
determining a pseudo time-dependent record based on the result set.

**5.** A computer-implemented method in accordance with claim 4, wherein executing the join operation further includes:

calculating a new time interval based on the pseudo time-dependent record;
determining if the new time interval overlaps a previous time interval generated from the pseudo time dependency;
retaining each data record of the plurality of data records if the new time interval overlaps the previous time interval generated from the pseudo time dependency; and
initializing each data record of the plurality of data records if the new time interval does not overlap the previous time interval generated from the pseudo time dependency.

**6.** A computer-implemented method in accordance with claim 5, wherein executing the join operation further includes:

recalculating the new time interval based on the overlap of the previous time interval with a previous new time interval; and
determining a new result set of the join operation.

**7.** A computer-implemented method of linking the contents of two or more at least partially time-independent tables in a multidimensional data source, the method comprising:

determining a pseudo time dependency between the two or more at least partially time-independent tables;
generating a first time interval for the join operation based on the pseudo time dependency, and
executing a join operation using the first time interval.

**8.** A computer-implemented method in accordance with claim 7 , wherein executing the join operation includes:

determining a result set of the join operation, the result set including a plurality of data records; and
determining a pseudo time-dependent record based on the result set.

**9.** A computer-implemented method in accordance with claim 8, wherein executing the join operation further includes:

calculating a new time interval based on the pseudo time-dependent record;
determining if the new time interval overlaps the first time interval;
retaining each data record of the plurality of data records if the new time interval overlaps the first time interval; and
initializing each data record of the plurality of data records if the new time interval does not overlap the first time interval.

**10.** A computer-implemented method in accordance with claim 9, wherein executing the join operation further includes:

recalculating the new time interval based on the overlap of the previous time interval with a previous time interval; and
determining a new result set of the join operation.

**11.** A computer-implemented method in accordance with claim 10, wherein executing the join operation further includes:

sorting the new result set of the join operation; and
displaying the sorted new result set on a display.

**12.** A computer program product, tangible embodied on a computer-readable medium, operable to cause a data processing apparatus to:

determine a pseudo time dependency between the two or more at least partially time-independent tables;
generate a first time interval for the join operation based on the pseudo time dependency; and
execute a join operation using the first time interval.

13. A computer program product in accordance with claim 12, further comprising a code module configured to cause the computer to generate the join operation for the two or more at least partially time-independent tables, the join operation including a query instruction executable on the multidimensional data source, the query instruction having at least one time attribute.

14. A computer program product in accordance with claim 13, wherein the at least one time attribute includes the first time interval.

15. A computer program product in accordance with anyone of claim 12 to 14, wherein the join operation is an inner join operation and / or a left outer join operation .

Table T00001 : CRCOST : Charateristic : Costcenter ( CRCOST )

| | | Technikal Nam | | Description | Key Date |
|---|---|---|---|---|---|
| ☑ | F1 | CRCOST | | Costcenter | |
| ☑ | F2 | CRPROFIT | | Profitcenter | |
| ☑ | F3 | CRRESP | | Responsible | |
| ☐ | F11 | 0DATEFROM | | Valid from | |
| ☐ | F12 | 0DATETO | | Valid to | |

Table T00002 : CRCOST : Charateristic : Profitcenter (CRPROFIT)

| | | Technikal Nam | | Description | Key Date |
|---|---|---|---|---|---|
| ☑ | F13 | CRPROFIT | | Proficenter | |
| ☑ | F14 | CRRESP | | Responsible | |
| ☐ | F19 | 0DATEFROM | | Valid from | |
| ☐ | F20 | 0DATETO | | Valid to | |

Fig. 1

| PROFITC | RESP | DATEFROM | DATETO |
|---------|------|----------|--------|
| BW | Bill | 1.1.2000 | 30.6.2001 |
| BW | Bob | 1.7.2001 | 31.12.9999 |

| CSTCNTR | PROFITC | RESP | DATEFROM | DATETO |
|---------|---------|------|----------|--------|
| 4711 | BW | Jack | 1.1.2001 | 31.5.2001 |
| 4711 | BW | John | 1.6.2001 | 31.12.2001 |
| 4711 | BW | Joe | 1.1.2002 | 31.12.9999 |
| 0815 | KM | Jane | 1.1.2001 | 31.1.2001 |
| 0815 | KM | Jill | 1.2.2001 | 31.12.9999 |

# Fig. 2

Fig. 3

PROFITCENTER = BW and COSTCENTER = 4711

| PROFITC | RESP | DATEFROM | DATETO | CSTCNTR | PROFITC | RESP | DATEFROM | DATETO |
|---------|------|----------|--------|---------|---------|------|----------|--------|
| BW | Bill | 1.1.2000 | 30.6.2001 | 4711 | BW | Jack | 1.1.2001 | 31.5.2001 |
| BW | Bill | 1.1.2000 | 30.6.2001 | 4711 | BW | John | 1.6.2001 | 31.12.2001 |
| BW | Bill | 1.1.2000 | 30.6.2001 | 4711 | BW | Joe | 1.1.2002 | 31.12.9999 |
| BW | Bob | 1.7.2001 | 31.12.9999 | 4711 | BW | Jack | 1.1.2001 | 31.5.2001 |
| BW | Bob | 1.7.2001 | 31.12.9999 | 4711 | BW | John | 1.6.2001 | 31.12.2001 |
| BW | Bob | 1.7.2001 | 31.12.9999 | 4711 | BW | Joe | 1.1.2002 | 31.12.9999 |

Fig. 4

EP 1 806 664 A1

PROFITCENTER = BW and COSTCENTER = 4711

| PROFITC | RESP | DATEFROM | DATETO | CSTCNTR | PROFITC | RESP | DATEFROM | DATETO |
|---------|------|----------|--------|---------|---------|------|----------|--------|
| BW | Bill | 1.1.2000 | 30.6.2001 | 4711 | BW | Jack | 1.1.2001 | 31.5.2001 |
| BW | Bill | 1.1.2000 | 30.6.2001 | 4711 | BW | John | 1.6.2001 | 31.12.2001 |
| BW | Bill | 1.1.2000 | 30.6.2001 | 4711 | BW | Joe | 1.1.2002 | 31.12.9999 |
| BW | Bob | 1.7.2001 | 31.12.9999 | 4711 | BW | Jack | 1.1.2001 | 31.5.2001 |
| BW | Bob | 1.7.2001 | 31.12.9999 | 4711 | BW | John | 1.6.2001 | 31.12.2001 |
| BW | Bob | 1.7.2001 | 31.12.9999 | 4711 | BW | Joe | 1.1.2002 | 31.12.9999 |

## Fig. 5

EP 1 806 664 A1

# Fig. 6

EP 1 806 664 A1

| Time Characteristic | Text |
|---|---|
| 0CALMONTH | Calendar Year / Month |
| 0CALQUARTER | Calendar Year / Quarter |
| 0CALWEEK | Calendar Year / Week |
| 0CALYEAR | Calendar Year |
| 0FISCPER | Fiscal year / period |
| 0FISCYEAR | Fiscal year |

# Fig. 7

**Definition Time Dependency...**  ☒

⦿ Valid from: | 0CALDAY Calendar Day

Valid until: | CRCDATE1

○ Time Interval | ▽

✓ ✕

| T00001 : CRTIM2 : InfoCube : Demo (CRTIM2) | | Technical Name | | Description | Key Date |
|---|---|---|---|---|---|
| ▽ | | | CRTIM21 | Dimension Customer | |
| ▽ | F1 | | 0D_CUSTOMER | Customer | |
| | F2 | | CRCDATE1 | Date 01 | ☐ |
| ▽ | | | CRTIM2T | Dimension Time | |
| | F3 | | 0CALDAY | Calendar Day | ☐ |
| ▽ | | | CRTIM2U | Units / Key Figures | |
| ▽ | F4 | | 0CURRENCY | Currency | |
| | | | KYF | Key Figures | |
| ▽ | F5 | | 0AMOUNT | Amount | |

**Fig. 8**

| T00003 : CRTIM : InfoCube : Demo ( CRTIM ) | | | | | | | |
|---|---|---|---|---|---|---|---|
| | | | Technical Name | | Description | Key Date | from | To |
| | ⚛ | | CRTIM21 | | Dimension: Customer | | | |
| ☑ | | F1 | 0D_CUSTOMER | ⊞ | Customer | | | |
| ☑ | | F2 | CRCDATE1 | ⊞ | Date 01 | ☐ | ☐ | ☑ |
| | ⚛ | | CRTIM2T | | Dimension Time | | | |
| ☑ | | F3 | 0CALDAY | 🕐 | Calendar Day | ☐ | ☑ | ☐ |
| | ⚛ | | CRTIM2U | | Units / Key Figures | | | |
| ☑ | | F4 | 0CURRENCY | ⊞ | Currency | | | |
| | ⚛ | | KYF | | Key Figures | | | |
| ☑ | | F5 | 0AMOUNT | ⊞ | Amount | | | |
| | | | | | | | | |

# Fig. 9

EP 1 806 664 A1

| | | | Technical Name | | Description | Key Date |
|---|---|---|---|---|---|---|
| 🕐 T00003 : CRTIM : InfoCube : Demo ( CRTIM ) | | | | | | |
| | 🏛 | | CRTIM1 | | Dimension: Customer | |
| ☑ | | F14 | 0D_CUSTOMER | ▦ | Customer | |
| | 🏛 | | CRTIMT | | Dimension Time | |
| ☑ | | F15 | 0CALDAY | 🕐 | Calendar Day | ☐ |
| ☑ | | F16 | 0CALMONTH | 🕐 | Cal. year / month | ☐ |
| ☑ | | F17 | 0CALMONTH2 | 🕐 | Calendar month | |
| ☑ | | F18 | 0CALQUART1 | 🕐 | Quarter | |
| ☑ | | F19 | 0CALQUARTER | 🕐 | Cal. Year / Quarter | ☐ |
| ☑ | | F20 | 0CALWEEK | 🕐 | Calendar Year / Week | ☐ |
| ☑ | | F21 | 0CALYEAR | 🕐 | Calendar Year | ☐ |
| ☑ | | F22 | 0FISCPER | 🕐 | Fiscal year / period | ☐ |
| ☑ | | F23 | 0FISCPER3 | 🕐 | Posting period | |
| ☑ | | F24 | 0FISCVARNT | 🕐 | Fiscal Year Variant | |
| ☑ | | F25 | 0FISCYEAR | 🕐 | Fiscal Year | ☐ |
| ☑ | | F26 | 0HALFYEAR1 | 🕐 | Halfyear | |
| ☑ | | F27 | 0WEEKDAY1 | 🕐 | Weekday | |
| | 🏛 | | KYF | | Key Figures | |
| ☑ | | F28 | CRCURPLF1 | ▦ | Amount | |
| ☑ | | F29 | CRDATE | ▦ | Date 00 | ☐ |
| ☑ | | F30 | CRDATE1 | ▦ | Date 01 | ☐ |
| ☑ | | F31 | CRDATE2 | ▦ | Date 02 | ☐ |

**Definition Time Dependency...** ⊠

○ Valid from:

Valid until:

⊙ Time Interval   0CALMONTH Calendar year

☑ ☒

# Fig. 10

**T00003 : CRTIM : InfoCube: Demo ( CRTIM )**

| | | | Technical Name | | Description | Key Date | from | To |
|---|---|---|---|---|---|---|---|---|
| | | | CRTIM21 | | Dimension: Customer | | | |
| ☑ | | F14 | 0D_CUSTOMER | | Customer | | | |
| | | | CRTIMT | | Dimension: Time | | | |
| ☑ | | F15 | OCALDAY | | Calendar Day | ☐ | ☐ | ☐ |
| ☑ | | F16 | OCALMOUNT | | Cal. year / month | ☐ | ☑ | ☑ |
| ☐ | | F33 | 0DATETO | | Valid to | | | |
| ☐ | | F32 | 0DATEFROM | | Valid from | | | |
| ☑ | | F17 | OCALMONTH2 | | Calendar month | | | |
| ☑ | | F18 | OCALQUARTER1 | | Quarter | | | |
| ☑ | | F19 | OCALQUARTER | | Cal. Year / Quarter | ☐ | | |
| ☑ | | F20 | OCALWEEK | | Calendar Year / Week | ☐ | | |
| ☑ | | F21 | OCALYEAR | | Calendar Year | ☐ | | |
| ☑ | | F22 | OFISCPER | | Fiscal year / period | ☐ | | |
| ☑ | | F23 | OFISCPER3 | | Posting period | | | |
| ☑ | | F24 | OFISCVARNT | | Fiscal Year Variant | | | |
| ☑ | | F25 | OFISCYEAR | | Fiscal Year | ☐ | | |
| ☑ | | F26 | OFISCYEAR1 | | Halfyear | | | |
| ☑ | | F27 | OWEEKDAY1 | | Weekday | | | |
| | | | KYF | | Key Figures | | | |
| ☑ | | F28 | CRCURPLF1 | | Amount | | | |
| ☑ | | F29 | CRDATE | | Date 00 | ☐ | | |
| ☑ | | F30 | CRDATE1 | | Date 01 | ☐ | | |
| ☑ | | F31 | CRDATE2 | | Date 02 | ☐ | | |

# Fig. 11

**T00001 : CRCOST : Characteristic Costcenter (CRCOST)**

| | | | Technical Name | | Description | Key Date |
|---|---|---|---|---|---|---|
| ☑ | 🔑 | F1 | CRCOST | | Costcenter | |
| ☑ | | F2 | CRPROFIT | | Profitcenter | |
| ☑ | | F3 | CRRESP | | Responsible | |
| ☐ | | F11 | 0DATEFROM | | Valid from | |
| ☐ | | F12 | 0DATETO | | Valid to | |

**T00002 : CRPROFIT: Characteristic Profitcenter (CRPROFIT)**

| | | | Technical Name | | Description | Key Date |
|---|---|---|---|---|---|---|
| ☑ | 🔑 | F13 | CRPROFIT | | Profitcenter | |
| ☑ | | F14 | CRRESP | | Responsible | |
| ☐ | | F19 | 0DATEFROM | | Valid from | |
| ☐ | | F20 | 0DATETO | | Valid to | |

| | | | Technical Name | | Description | Key Date | from | To |
|---|---|---|---|---|---|---|---|---|
| ☑ | 🔑 | F21 | CRSPONSOR | | Sponsor | | | |
| ☑ | 🔑 | F22 | 0CALMONTH | | Calendar Year / Month | ☐ | | |
| ☑ | | F23 | CRCOST | | Costcenter | | | |
| ☑ | | F24 | CRPROFIT | | Profitcenter | | | |
| ☑ | | F25 | 0DATE | | Date | ☐ | ☐ | ☐ |
| ☑ | | F28 | CRCDATE1 | | Date 01 | ☐ | ☑ | ☐ |
| ☑ | | F29 | CRCDATE2 | | Date 02 | ☐ | ☐ | ☑ |

**Fig. 12**

EP 1 806 664 A1

| CROST Costcenter | CRPROFITC Profitcenter | CRRESP Responsible | DATEFROM Valid_from | DATETO Valid_to |
|---|---|---|---|---|
| 4711 | BW | Jack | 01.01.2000 | 31.05.2001 |
| 4711 | BW | John | 01.06.2001 | 31.12.2001 |
| 4711 | BW | Joe | 01.01.2002 | 31.12.9999 |
| 0815 | KM | Jane | 01.01.2001 | 31.01.2001 |
| 0815 | KM | Jill | 01.02.2001 | 31.12.9999 |

| CRPROFITC Profitcenter | CRRESP Responsible | DATEFROM Valid_from | DATETO Valid_to |
|---|---|---|---|
| BW | Bill | 01.01.2000 | 30.06.2001 |
| BW | Bob | 01.07.2001 | 31.12.9999 |

| CRSPONSOR Sponsor | CALMONTH Cal./ Year Month | CRCOST Costcenter | CRPROFIT Profitcenter | DATEFROM Date_01 | DATETO Date_02 |
|---|---|---|---|---|---|
| Smith | 04.2003 | 4711 | BW | 01.04.2003 | 30.04.2003 |
| Miller | 02.2001 | 4711 | BW | 01.02.2001 | 28.02.2001 |

## Fig. 13

# Fig. 14

EP 1 806 664 A1

**Fig. 15**

### 🕐 T00001 : CRCOST : Characteristic: Costcenter (CRCOST)

| | | | Technical Nam | | Description | Key Date |
|---|---|---|---|---|---|---|
| ☑ | 👤 | F1 | CRCOST | 🗃 | Costcenter | |
| ☑ | | F2 | CRPROFIT | 🗃 | Profitcenter | |
| ☑ | | F3 | CRRESP | 🗃 | Responsible | |
| ☐ | 🕑 | F11 | 0DATEFROM | 🗃 | Valid from | |
| ☐ | 🕑 | F12 | 0DATETO | 🗃 | Valid to | |

### 🕐 T00002 : CRCOST : Characteristic: Profitcenter(CRPROFIT)

| | | | Technical Nam | | Description | Key Date |
|---|---|---|---|---|---|---|
| ☑ | 👤 | F13 | CRPROFIT | 🗃 | Profitcenter | |
| ☑ | | F14 | CRRESP | 🗃 | Responsible | |
| ☐ | 🕑 | F19 | 0DATEFROM | 🗃 | Valid from | |
| ☐ | 🕑 | F20 | 0DATETO | 🗃 | Valid to | |

### 🕐 T00001 : CRCOST :

| | | | Technical Name | | Description | Key Date | from | To |
|---|---|---|---|---|---|---|---|---|
| ☑ | 👤 | F21 | CRSPONSOR | 🗃 | Sponsor | | | |
| ☑ | 👤 | F22 | 0CALMONTH | 🕐 | Calendar Year / Month | ☐ | ☑ | ☑ |
| ☐ | 🕑 | F27 | 0DATETO | 🗃 | Valid to | | | |
| ☐ | 🕑 | F26 | 0DATEFROM | 🗃 | Valid from | | | |
| ☑ | | F23 | CRCOST | 🗃 | Costcenter | | | |
| ☑ | | F24 | CRPROFIT | 🗃 | Profitcenter | | | |
| ☑ | | F25 | 0DATE | 🗃 | Date | ☐ | ☐ | ☐ |
| ☑ | | F28 | CRCDATE1 | 🗃 | Date 01 | ☑ | ☐ | ☐ |
| ☑ | | F29 | CRCDATE2 | 🗃 | Date 02 | ☐ | ☐ | ☐ |

**T00001 : CRCOST : Characteristic: Costcenter (CRCOST)**

|  |  |  | Technical Nam |  | Description | Key Date |
|---|---|---|---|---|---|---|
| ☑ | 🔑 | F1 | CRCOST | 🗚 | Costcenter | |
| ☑ | | F2 | CRPROFIT | 🗚 | Profitcenter | |
| ☑ | | F3 | CRRESP | 🗚 | Responsible | |
| ☐ | 🕑 | F11 | 0DATEFROM | 🗚 | Valid from | |
| ☐ | 🕑 | F12 | 0DATETO | 🗚 | Valid to | |

**T00002 : CRCOST : Characteristic: Profitcenter(CRPROFIT)**

|  |  |  | Technical Nam |  | Description | Key Date |
|---|---|---|---|---|---|---|
| ☑ | 🔑 | F13 | CRPROFIT | 🗚 | Profitcenter | |
| ☑ | | F14 | CRRESP | 🗚 | Responsible | |
| ☐ | 🕑 | F19 | 0DATEFROM | 🗚 | Valid from | |
| ☐ | 🕑 | F20 | 0DATETO | 🗚 | Valid to | |

Left Outer Join

Left Outer Join

**T00001 : CRCOST :**

|  |  |  | Technical Name |  | Description | Key Date | from | To |
|---|---|---|---|---|---|---|---|---|
| ☑ | 🔑 | F21 | CRSPONSOR | 🗚 | Sponsor | | | |
| ☑ | 🔑 | F22 | 0CALMONTH | 🕑 | Calendar Year / Month | ☐ | | |
| ☑ | | F23 | CRCOST | 🗚 | Costcenter | | | |
| ☑ | | F24 | CRPROFIT | 🗚 | Profitcenter | | | |
| ☑ | | F25 | 0DATE | 🗚 | Date | ☐ | ☐ | ☐ |
| ☑ | | F28 | CRCDATE1 | 🗚 | Date 01 | ☐ | ☑ | ☐ |
| ☑ | | F29 | CRCDATE2 | 🗚 | Date 02 | ☐ | ☐ | ☑ |

## Fig. 16

45

EP 1 806 664 A1

**T00001 : CRCOST : Characteristic: Costcenter (CRCOST)**

| | | | Technical Nam | | Description | Key Date |
|---|---|---|---|---|---|---|
| ☑ | 🔑 | F1 | CRCOST | ⬛ | Costcenter | |
| ☑ | | F2 | CRPROFIT | ⬛ | Profitcenter | |
| ☑ | | F3 | CRRESP | ⬛ | Responsible | |
| ☐ | ⏱ | F11 | 0DATEFROM | ⬛ | Valid from | |
| ☐ | ⏱ | F12 | 0DATETO | ⬛ | Valid to | |

**T00002 : CRCOST : Characteristic: Profitcenter(CRPROFIT)**

| | | | Technical Nam | | Description | Key Date |
|---|---|---|---|---|---|---|
| ☑ | 🔑 | F13 | CRPROFIT | ⬛ | Profitcenter | |
| ☑ | | F14 | CRRESP | ⬛ | Responsible | |
| ☐ | ⏱ | F19 | 0DATEFROM | ⬛ | Valid from | |
| ☐ | ⏱ | F20 | 0DATETO | ⬛ | Valid to | |

Left Outer John

Left Outer John

**T00001 : CROSPONS : DataStoreObject: CROSPONS(CROSPONS)**

| | | | Technical Name | | Description | Key | from | To |
|---|---|---|---|---|---|---|---|---|
| ☑ | 🔑 | F21 | CRSPONSOR | ⬛ | Sponsor | | | |
| ☑ | 🔑 | F22 | 0CALMONTH | 🕐 | Calendar Year / Month | ☐ | ☑ | ☑ |
| ☐ | ⏱ | F27 | 0DATETO | | Valid to | | | |
| ☐ | ⏱ | F26 | 0DATEFROM | | Valid from | | | |
| ☑ | | F23 | CRCOST | ⬛ | Costcenter | | | |
| ☑ | | F24 | CRPROFIT | ⬛ | Profitcenter | | | |
| ☑ | | F25 | 0DATE | ⬛ | Date | ☐ | ☐ | ☐ |
| ☑ | | F28 | CRCDATE1 | ⬛ | Date 01 | ☐ | ☐ | ☐ |
| ☑ | | F29 | CRCDATE2 | ⬛ | Date 02 | ☐ | ☐ | ☐ |
| | | | | | | | | |

## Fig. 17

1st row

⇨overlap of time intervals.

PROFITCENTER = BW

COSTCENTER = 4711

Smith

Bob

Joe

1.1.2000          1.7.2001          04.2003
                  1.1.2002 overlap inner-parts today          t

---

2nd row

Miller

no overlap of time
interval⇨inialize left outer part

PROFITCENTER = BW

COSTCENTER = 4711

Bob

Joe

1.1.2000          02.2001          1.7.2001          1.1.2002 overlap inner-parts today          t

---

3nd row

Bill

PROFITCENTER = BW
Jack

COSTCENTER = 4711

no overlap of time
interval⇨inialize
left outer part

Smith

1.1.2000 overlap inner-parts 1.6.2001 1.7.2001          04.2003          today          t

---

4th row

Miller

Bill

PROFITCENTER = BW
Jack

COSTCENTER = 4711

⇨overlap of time intervals

1.1.2000 overlap inner-parts 1.6.2001 1.7.2001          02.2001          today          t

---

5th row   no overlap of time
interval⇨inialize
left outer part

PROFITCENTER = BW

COSTCENTER = 4711

Smith

Bob

John

1.1.2000          1.6.2001 1.7.2001 overlap inner-parts 1.1.2002 04.2003 today          t

---

6th row

Miller

PROFITCENTER = BW

COSTCENTER = 4711

Bob

no overlap of time
interval⇨inialize
left outer part

John

1.1.2000          02.2001 1.6.2001 1.7.2001 overlap inner-parts 1.1.2002          today          t

---

7th row

Bill

PROFITCENTER = BW

COSTCENTER = 4711

no overlap of time
interval⇨inialize
left outer part

Smith

John

1.1.2000          1.6.2001 1.7.2001 overlap inner-parts 1.1.2002 04.2003 today          t

---

8th row

Miller

Bill

PROFITCENTER = BW

COSTCENTER = 4711

no overlap of time
interval⇨inialize
left outer part

John

1.1.2000          02.2001 1.6.2001 1.7.2001 overlap inner-parts 1.1.2002          today          t

## Fig. 18

European Patent Office

**EUROPEAN SEARCH REPORT**

Application Number

EP 06 02 2248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. J. O'CONNOR, S. W. TU, M. A. MUSEN: "Applying Temporal Joins to Clinical Databases" AMIA ANNUAL SYMPOSIUM, 1999, XP002417389 Washington, D.C. * page 4, paragraph 2 - paragraph 5 * ----- | 1-15 | INV. G06F17/30 |
| A | DENGFENG GAO ET AL: "Join operations in temporal databases" THE VLDB JOURNAL ; THE INTERNATIONAL JOURNAL ON VERY LARGE DATA BASES, SPRINGER-VERLAG, BE, vol. 14, no. 1, 1 March 2005 (2005-03-01), pages 2-29, XP019351967 ISSN: 0949-877X * the whole document * ----- | 1-15 | |
| A | JUN YANG ET AL: "Maintaining temporal views over non-temporal information sources for data warehousing" ADVANCES IN DATABASE TECHNOLOGY - EDBT'98. 6TH INTERNATIONAL CONFERENCE ON EXTENDING DATABASE TECHNOLOGY PROCEEDINGS SPRINGER-VERLAG BERLIN, GERMANY, 1998, pages 389-403, XP002417501 ISBN: 3-540-64264-1 * the whole document * ----- | 1-15 | TECHNICAL FIELDS SEARCHED (IPC) G06F |
| A | ENDERLE, J. ET AL: "Joining Interval Data in Relational Databases" SIGMOD, 13 June 2004 (2004-06-13), - 16 June 2004 (2004-06-16) XP002417502 * the whole document * ----- -/-- | 1-15 | |

The present search report has been drawn up for all claims

| Place of search | Date of completion of the search | Examiner |
|---|---|---|
| Munich | 30 January 2007 | Wohner, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................
& : member of the same patent family, corresponding document

EPO FORM 1503 03.82 (P04C01)

**European Patent Office**

## EUROPEAN SEARCH REPORT

Application Number

EP 06 02 2248

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEGEV A ET AL: "Event-join optimization in temporal relational databases" PROCEEDINGS OF THE FIFTEENTH INTERNATIONAL CONFERENCE ON VERY LARGE DATA BASES MORGAN KAUFMANN PALO ALTO, CA, USA, 1989, pages 205-215, XP002417503 * the whole document * | 1-15 | |

TECHNICAL FIELDS SEARCHED (IPC)

The present search report has been drawn up for all claims

| Place of search | Date of completion of the search | Examiner |
|---|---|---|
| Munich | 30 January 2007 | Wohner, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 806 664 A1**

## REFERENCES CITED IN THE DESCRIPTION

**Patent documents cited in the description**

- US 73020605 P